# EUROPÄISCHE PATENTSCHRIFT

(11) **EP 1 259 138 B1**
(45) Veröffentlichungstag und Bekanntmachung des Hinweises auf die Patenterteilung: **26.05.2004**
(21) Anmeldenummer: 01927652.6
(22) Anmeldetag: 07.02.2001
(51) Int. Cl.: A46D 1/00

(54) **BORSTE DOTIERT MIT EINER ANTIMIKROBIELLEN SUBSTANZ UND BORSTENWARE MIT SOLCHEN BORSTEN**
BRISTLE IMPREGNATED WITH AN ANTI-MICROBIAL AGENT AND BRUSHWARE COMPRISING BRISTLES OF THIS TYPE
POIL DE BROSSE TRAITE ANTIMICROBIEN ET ARTICLE DE BROSSERIE DOTE DE CES POILS

(30) Priorität: 03.03.2000 DE 10010572
(43) Veröffentlichungstag der Anmeldung: 27.11.2002
(73) Patentinhaber: CORONET-WERKE GmbH, 69483 Wald-Michelbach (DE)
(72) Erfinder: WEIHRAUCH, Georg, 69483 Wald-Michelbach (DE)
(74) Vertreter: Lasch, Hartmut Dipl.-Ing.
(86) Internationale Anmeldenummer: PCT/EP2001/001289
(87) Internationale Veröffentlichungsnummer: WO 2001/064073

(56) Entgegenhaltungen:
- WO-A-94/13870
- DE-A- 19 748 733
- US-A- 3 380 848
- US-A- 4 775 585
- US-A- 5 817 325
- US-A- 5 998 431
- PATENT ABSTRACTS OF JAPAN vol. 013, no. 569 (C-666), 15. Dezember 1989 (1989-12-15) & JP 01 236008 A (DENTARU KAGAKU KK), 20. September 1989 (1989-09-20)
- PATENT ABSTRACTS OF JAPAN vol. 015, no. 052 (C-0803), 7. Februar 1991 (1991-02-07) & JP 02 283312 A (SANPO SEIYAKU KK), 20. November 1990 (1990-11-20)

## Beschreibung

Die Erfindung betrifft eine Borste mit einer antimikrobiellen Ausrüstung, die überwiegend aus thermoplastischem Kunststoff besteht und mit einer antimikrobiellen Substanz dotiert ist, die bei Gebrauch an die Oberfläche der Borste diffundiert. Die Erfindung ist ferner auf Borstenwaren mit solchen Borsten gerichtet.

Borsten mit antimikrobieller Ausrüstung sind seit langem bekannt, haben aber kaum Eingang in die Praxis gefunden. So ist sehr früh die bekannte antimikrobielle Wirkung von Silber in kolloidaler Form und dessen Einsatzmöglichkeit bei Zahnbürsten erkannt worden (GB 446 303), indem oligodynamisches, kolloidales Silber in Borsten-Monofilamente eingebettet oder auf den Borstenträger aufgebracht wurde. Ebenso ist es bekannt, ein- oder mehrvalente Ionenbildner, darunter auch Silber und Silberverbindungen, in das Borsten material einzubetten oder auf der Borste aufzubringen (EP 0 678 548), wobei Silber in Partikelform <10µm mit einem Gehalt von 100ppm bis 10Mass% vorgeschlagen werden. Schließlich ist es bekannt (DE 195 08 539), eine Borste mit Partikeln unterschiedlicher Größe zu füllen, wobei die größeren Partikel aus Silber der Oxidationsstufe 0 bestehen und eine Größe von 1 bis 50µm aufweisen.

Es ist ferner bekannt (EP 0 413 833), Borstenmonofile mit einer Lösung oder Emulsion eines Polymers mit freien Säureradikalen und einem eingemischten kationischen Antibakterizid, z.B. Chlorhexidin, zu beschichten und die Schicht anschließend zu trocknen. Die Herstellung ist sehr aufwendig und die Haftung der Schicht auf dem Borstenkern unzureichend. Auch diffundiert das Antibakterizid zu schnell aus.

Ferner ist es in der Textilfasertechnik bekannt, Silber an Trägermaterialien, beispielsweise an Zeolit zu binden (US 4,525,410, EP 0 275 047) und das solchermaßen dotierte Zeolit in Partikelform in der Polymerschmelze für das Monofilament zu dispergieren und mit dieser zu extrudieren. Dabei soll die Faser aus einem Polymerkern mit höherem Schmelzpunkt und einer äußeren Schicht aus einem Polymer mit niedrigem Schmelzpunkt bestehen, die die silberdotierten Zeolitpartikel enthält. Ferner ist es bekannt (EP 0 116 865), eine Faser aus einem Nylon-Kern und äußeren Segmenten oder Schichten, die silberdotierte Zeolit-Partikel enthalten, zu koextrudieren.

Bei allen bekannten Systemen beruht die antimikrobielle Wirkung darauf, daß in feuchter Umgebung antimikrobiell wirksame Kationen aus der Borste bzw. der Faser ausdiffundieren, die die dünnen Zellwände von Mikroorganismen, insbesondere Bakterien, durchdringen und deren Proteinstoffwechsel blockieren.

Monofilamente der genannten Art haben beim Einsatz als Borsten oder in Borstenwaren folgende Nachteile: Soweit reines Silber als antimikrobielle Substanz eingesetzt wird, zwingt dies zu einer entsprechend hohen Füllung der Borste mit dem partikelförmigen Silber. Dies aber führt zu einer Reduzierung der Stabilität der Borsten und damit zu einer Verschlechterung der Gebrauchseigenschaften (Biegefähigkeit, Wiederaufrichtvermögen etc.). In der Praxis konnten sich daher solche Monofilamente nicht durchsetzen.

Andere mikrobielle Substanzen, insbesondere in Form von Metallsalzen oder silberdotiertem Zeolit, führen aufgrund des hohen Ballaststoffanteils gleichfalls zur Schwächung der Borste. Diese Schwächung kann nur teilweise durch eine Vergrößerung des Durchmessers aufgefangen werden, was aber bei einer Vielzahl von Borstenwaren, insbesondere Zahnbürsten, höchst unerwünscht ist. Hinzu kommt eine oft unerwünscht hohe Rauhigkeit der Borste. Alle bekannten Vorschläge haben den weiteren Nachteil, daß die antimikrobielle Substanz bereits vor der Ingebrauchnahme, insbesondere in feuchter Atmosphäre, abgegeben wird, so daß die Substanz vorzeitig aufgebraucht wird.

Ausgehend von dem Stand der Technik nach der EP 0 413 833 liegt der Erfindung die Aufgabe zugrunde, eine Borste für Borstenwaren, z.B. für Zahnbürsten, Körperpflege-, Kosmetik-, Hygienebürsten oder dergleichen, vorzuschlagen, die eine ausreichende antimikrobielle Wirkung bei unverändert guten Gebrauchseigenschaften aufweist. Ferner soll mit der Erfindung Vorsorge dafür getroffen werden, daß die antimikrobielle Wirkung nicht vorzeitig aufgebraucht wird.

Diese Aufgabe wird durch die Borste nach Anspruch 1 gelöst.

Durch die erfindungsgemäße Ausbildung werden die Gebrauchseigenschaften der Borste durch den ersten Querschnittsbereich garantiert, während der oder die weitere(n) Querschnittsbereich(e) für die Gebrauchseigenschaften der Borste von untergeordneter Bedeutung sind. Die Dotierung mit der antimikrobiellen Substanz erfolgt ausschließlich oder überwiegend in einem der Querschnittsbereiche, während der oder die anderen Querschnittsbereiche als diffusionssteuernd für die antimikrobielle Substanz wirken. Die Steuerung der Diffusionsgeschwindigkeit der mikrobiellen Substanz kann durch unterschiedliche Dotierung der Querschnittsbereiche mit der Substanz oder dadurch erfolgen, daß ein nicht-dotierter Querschnittsbereich als Diffusionsbremse oder als Reflektor für die ionisierten Atome oder Moleküle wirkt. Dadurch läßt sich zugleich die Wirkungsdauer der antimikrobiellen Substanz steuern.

Die Gebrauchseigenschaften der Borste einerseits und die Diffusionsrate andererseits lassen sich ferner dadurch beeinflussen, daß die Querschnittsbereiche aus verschiedenen oder verschieden ausgerüsteten Kunststoffen bestehen oder verschiedene Querschnittsflächen und/oder Querschnittskonturen aufweisen.

Vorzugsweise ist der weitere und zweckmäßigerweise kleinere Querschnittsbereich der Borste mit der Substanz in hoher Konzentration dotiert, so daß eine ausreichende Menge an Ladungsträgern in feuchter Atmosphäre diffundiert. Dies wird bei dieser Ausführungsform noch dadurch unterstützt, daß der größere Querschnittsbereich als Diffusionsbremse wirkt, so daß die Substanz vornehmlich an der Oberfläche des hoch dotierten Querschnittsbereichs und erst mit erheblicher Verzögerung an der Oberfläche des großen Querschnittsbereichs ausdiffundiert.

Es kann auch der große Querschnittsbereich des Monofilaments mit der Substanz in einer seine mechanischen Gebrauchseigenschaften nicht beeinträchtigenden Konzentration dotiert sein, wobei der weitere, kleinere Querschnittsbereich ausschließlich als mikrobiell inerte Diffusionsbremse wirkt und für eine Regulierung der Wirkstoffabgabe aus dem größeren Querschnitt sorgt. Es kann aber auch der kleinere Querschnitt mit der antimikrobiellen Substanz hoch dotiert sein und findet dann auch eine Diffusion in den größeren Querschnittsbereich hinein statt, so daß die dort oberflächig ausdiffundierenden Ionen ständig aus dem anderen Querschnittsbereich ersetzt werden. Gleichzeitig bildet aber der große Querschnittsbereich eine Diffusionsbremse, da die Ionen vorzugsweise an der freien Oberfläche des kleineren Querschnittsbereichs auswandern, wo der geringere Diffusionswiderstand herrscht.

In weiteren Beispielen ist vorgesehen, daß der weitere Querschnittsbereich am Umfang des großen Querschnittsbereich angeordnet ist und entweder einen Teil der Oberfläche der Borste bildet oder diese vollständig umfaßt. Auf diese Weise ist einerseits eine vergleichsweise schnelle Abgabe der Ionen an der freien Oberfläche des kleineren Querschnittsbereichs garantiert, andererseits wird der für die Stabilität und das Biegeverhalten der Borste maßgebliche Querschnittsbereich nur wenig geschwächt, so daß auch sehr dünne Borsten ausreichend mit antimikrobieller Substanz dotiert werden können. Bei dünnen Borsten, insbesondere bei Durchmessern kleiner 0,75mm, kann die Borste vollständig von einer als Diffusionsbremse wirkenden dünnen Schicht umgeben sein.

Der weitere, kleinere Querschnittsbereich kann einen Sektor in dem größeren Querschnittsbereich oder auch eine Schicht auf der Oberfläche desselben bilden. Im erstgenannten Fall kann dieser weitere Querschnittsbereich hoch dotiert sein, während er bei Ausbildung als Schicht durch entsprechende Auswahl des Materials ausschließlich als Diffusionsbremse wirkt. Diese Schicht kann mit dem Monofilament extrudiert oder nachträglich aufgebracht werden.

Erfindungsgemäß ist der weitere, kleinere Querschnittsbereich im Innern des großen Querschnittsbereichs angeordnet, beispielsweise in Form koextrudierter dünner Monofile mit beliebiger Querschnittsform (kreisrund, mehreckig, kreuzförmig etc.). Es kann der weitere Querschnittsbereich aber auch den großen Querschnittsbereich in Sektoren teilen, also beispielsweise als sternförmige Schicht geringer Stärke ausgebildet sein. Dabei findet die Diffusion der antimikrobiellen Substanz auch in den größeren Querschnittsbereich hinein statt.

Vorzugsweise weist wenigstens ein weiterer Querschnittsbereich Silber der Oxidationsstufe 0 als antimikrobielle Substanz auf. Statt dessen oder zusätzlich kann auch der große Querschnittsbereich Silber der Oxidationsstufe 0 enthalten,
wobei dann vorzugsweise der weitere, kleinere Querschnittsbereich die gleiche Substanz in größerer Konzentration aufweist.

Eine vorteilhafte Ausführungsform zeichnet sich dadurch aus, daß der große Querschnittsbereich Silber der Oxidationsstufe 0 mit einem Gehalt von 0<c<50.000ppm und der weitere Querschnittsbereich mit einem Gehalt c≤100% aufweist.

In einer bevorzugten Ausführung weist der weitere, kleinere Querschnittsbereich Silber der Oxidationsstufe 0 mit einem Gehalt von 500<c<100.000ppm auf. Praktische Versuche mit einer solchen Borste haben gezeigt, daß die Kombination einer hohen Konzentration in dem weiteren kleineren Querschnittsbereich und einer niedrigeren Konzentration in dem großen Querschnittsbereich zu einer Diffusion der antimikrobiellen Substanz mit einer einerseits ausreichenden Geschwindigkeit und andererseits über einen ausreichenden Zeitraum sorgt, der etwa der Benutzungsdauer einer Zahnbürste entspricht.

Ein anderes Ausführungsbeispiel der Erfindung zeichnet sich dadurch aus, daß wenigstens ein Querschnittsbereich Silber der Oxidationsstufe 1 aufweist, wobei es sich um Silberhalogenide, sulfate, -carbonate oder organische Silbersalze handeln kann, bei denen die Kationen-Bildung in Abhängigkeit vom Löslichkeitsprodukt in größerem Maß erfolgt.

Es können die vorgenannten antimikrobiellen Substanzen auch derart miteinander kombiniert werden, daß ein Querschnittsbereich Silber der Oxidationsstufe 0 und wenigstens ein anderer Querschnittbereich Silber der Oxidationsstufe 1 aufweist.

Soweit Silber der Oxidationsstufe 0 eingesetzt wird, kann es in dem weiteren, kleineren Querschnittbereich in Form mindestens eines Fadens enthalten sein, der beim Extrudieren des Monofilaments mitläuft. Vorzugsweise ist aber das Silber der Oxidationsstufe 0 oder 1 in disperser Form in der Kunststoffmatrix angeordnet und wird zusammen mit der Kunststoffschmelze extrudiert. Hierfür kann ein Granulat eingesetzt sein, das die Partikel bereits enthält. Statt dessen können silberhaltige Polymerpartikel zusammen mit dem Polymer extrudiert werden. Da die Polymerpartikel aufgrund des Silbergehalts eine bessere Formbeständigkeit aufweisen, bleiben sie weitgehend in ihrer Partikelform erhalten. Borsten dieser Art ohne antimikrobielle Ausrüstung und ihre Herstellung sind beispielsweise in der WO 17/09906 beschrieben, deren Inhalt zum Gegenstand vorliegender Anmeldung gemacht wird.

Es kann statt dessen vorgesehen sein, daß das Silber der Oxidationsstufe 0 auf einen der Querschnittsbereiche als Schicht aufgebracht ist.

Es können sämtliche Querschnittsbereiche der Borste aus dem gleichen thermoplastischen Kunststoff bestehen. Statt dessen ist es aber auch möglich, den weiteren kleineren Querschnittsbereich aus einem thermoplastischen Elastomer zu bilden, der einen geringeren Diffusionswiderstand gegenüber der antimikrobiellen Substanz aufweist.

Ferner können die Querschnittsbereiche oberflächig oder durchgehend unterschiedlich eingefärbt sein, um eine Verbrauchsanzeige zu ermöglichen, indem sich zunehmende Abnutzung am freien Borstenende oder am Borstenmantel an einer entsprechenden Farbänderung zeigt.

Als thermoplastische Kunststoffe werden vorzugsweise solche eingesetzt, die eine Wasseraufnahmefähigkeit von wenigstens 0,1Mass% aufweisen. Als solche sind vor allem Polyamide, Polyester und Polyurethane zu nennen.

Eine Steuerung der Diffusionsrate ist auch dadurch möglich, daß die Querschnittsbereiche der Borste bzw. die sie bildenden Polymere eine unterschiedliche Wasseraufnahmefähigkeit aufweisen, so daß die Kationen in dem Querschnittsbereich mit der größeren Wasseraufnahmefähigkeit schneller gebildet werden und ausdiffundieren als in dem anderen Querschnittsbereich.

Die Querschnittsbereiche der Borste können auch durch zwei oder mehr zusammengeführte Monofile gebildet sein, von denen jedes einen der Querschnittsbereiche bildet.

Die Erfindung betrifft ferner eine Borstenware mit einem Borstenträger aus Kunststoff und Borsten, die erfindungsgemäß ausgebildet sind. Eine solche Borstenware zeichnet sich erfindungsgemäß dadurch aus, daß auch der Borstenträger zumindest bereichsweise antimikrobiell ausgerüstet ist. Damit trägt die Erfindung bei Zahnbürsten der wissenschaftlich gesicherten Erkenntnis Rechnung, daß nicht zuletzt aufgrund der stets feuchten Atmosphäre, aber auch aufgrund der verwickelten Hohlräume im Bereich des Borstenbesatzes, ein relativ hoher Bakterienbefall am Borstenträger festzustellen ist.

Besteht der Borstenträger, wie üblich, aus Kunststoff, so weist er vorzugsweise partikelförmiges Silber der Oxidationsstufe 0 oder 1 auf.

Besteht der Borstenträger, wie gleichfalls bekannt, aus zwei verschiedenen oder verschiedenartigen Kunststoffen, die im Mehrkomponentenspritzguß hergestellt sind, ist wenigstens eine der Komponenten mit partikelförmigem Silber der Oxidationsstufe 0 oder 1 gefüllt.

In bevorzugter Ausführung ist der Borstenträger nur oder überwiegend im Bereich der Befestigung der Borsten mit partikelförmigem Silber der Oxidationsstufe 0 oder 1 gefüllt, also in demjenigen Bereich, der für den Bakterienbefall und das Einnisten von Bakterien besonders gefährdet ist.

Schließlich sind bei einer solchen Borstenware die Borsten am oder im Borstenträger vorzugsweise einzeln befestigt, was gegenüber einer bündelförmigen Anordnung der Borsten die freie Diffusion begünstigt, weil einerseits die Feuchtigkeit zu allen Borsten gleichmäßig schnell Zutritt hat, andererseits der Borstenbesatz nach Gebrauch schneller austrocknet, womit einerseits dem Bakterienbefall vorgebeugt, andererseits die Diffusion blockiert wird.

Ferner sind die Borsten -einzeln oder in Bündeln- vorzugsweise durch thermische Verfahren spaltenfrei mit dem Borstenträger verbunden, um das Einnisten von Bakterien zu vermeiden und einem zu schnellen Verbrauch der antimikro biellen Substanz vorzubeugen. Als solche Verfahren kommen insbesondere das Einspritzen, das Schweißen oder das thermoplastische Fügen in Frage.

Borsten und Borstenwaren, insbesondere soweit sie Hygienezwecken dienen, wie Zahnbürsten, Kosmetikbürsten oder dergleichen, gelangen in Verpackungen zum Verarbeiter bzw. zum Endverbraucher. Häufig handelt es sich um Kunststoffverpakkungen oder sogenannte Blisterpackungen mit einem Träger aus Karton und einem transparenten Kunststoffblister. Da das Verpacken nicht unter keimlosen Reinraumbedingungen erfolgen kann, läßt sich nicht ausschließen, daß bereits beim Verpacken Keime in die Verpackung gelangen. Trotz luftdichten Abschlußes kann es bei Vorhandensein von Feuchtigkeit in der Verpackung zum Keimwachstum kommen, insbesondere, wenn es durch Temperaturwechsel zur Kondensation von Feuchtigkeit an der Innenseite der Verpackung, die schneller auf Temperaturwechsel reagiert als das verpackte Gut selbst, kommt.

Um die Kontamination der verpackten Borsten oder Borstenwaren mit Keimen zu verhindern kann die Verpackung mit einer antimikrobiellen Substanz ausgerüstet sein. Diese Substanz, bei der es sich vorzugsweise um Silber oder Silbersalze handelt, kann im Material der Verpackung in disperser Form eingebaut oder als Schicht an der Innenseite der Verpackung aufgebracht sein.

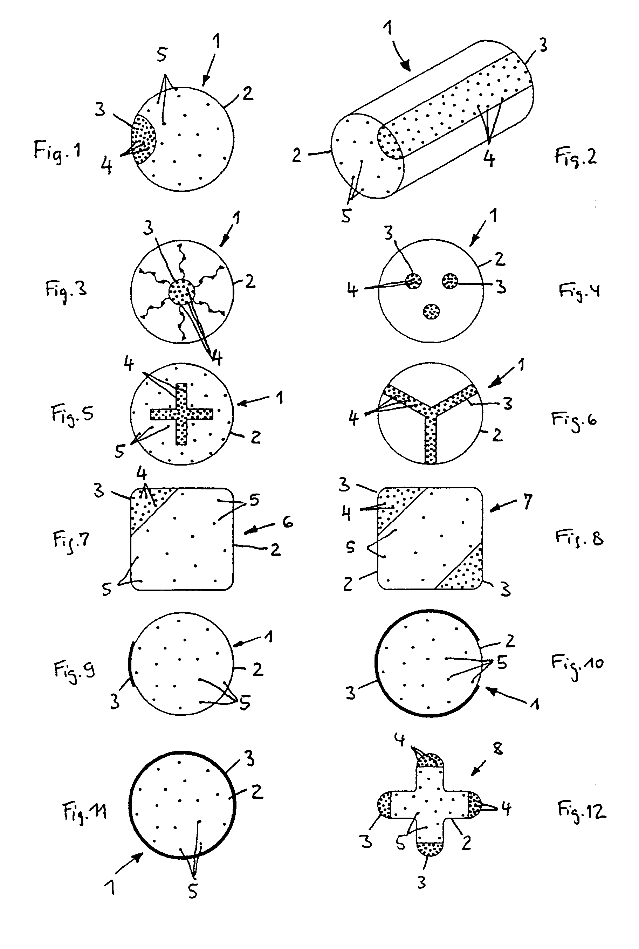

Nachstehend ist die Erfindung anhand einiger in der Zeichnung wiedergegebener Beispiele beschrieben, wobei nur Fig. 3-6 erfindungsgemäße Ausführungsbeispiele darstellen.

Fig.1 zeigt den Querschnitt einer Borste 1, deren erster, größerer Querschnittsbereich 2 aus einem thermoplastischen Kunststoff, z.B. Polyamid, Polyester oder Polyurethan besteht und die einen weiteren Querschnittsbereich 3 mit nennenswert kleinerem Querschnitt aufweist, der einen teilzylindrischen Sektor des gesamten Querschnitts bildet. Der Querschnittsbereich 2 weist die für eine Borste notwendige Gebrauchseigenschaften hinsichtlich Biegeverhalten und Wiederaufrichtvermögen auf, die durch den Querschnittsbereich 3 allenfalls in geringem Umfang ergänzt wird. Der Querschnittsbereich 3 kann im übrigen aus einem anderen Kunststoff, insbesondere einem anderem Thermoplast oder einem Elastomer bestehen.

Wie aus Fig.2 ersichtlich, verläuft der kleinere Querschnittsbereich 3 über die gesamte Länge der Borste 1 und ist diese vorzugsweise durch Extrudieren der beiden Materialkomponenten für die Querschnittsbereiche 2 und 3 hergestellt. Der kleinere Querschnittsbereich 3 ist mit einer antimikrobiellen Substanz, vorzugsweise Silber der Oxidationsstufe 0 oder 1, in Partikelform gefüllt. Dabei ist eine hohe Dotierung der antimikrobiellen Substanz vorgesehen. Der größere Querschnittsbereich 2 kann gleichfalls mit einer antimikrobiellen Substanz 5 in Partikelform gefüllt sein. Der thermoplastische Kunststoff des größeren Querschnittsbereichs 2 bildet bei diesem Beispiel eine Diffusionsbremse für die in dem kleineren Querschnittsbereich 3 hoch dotierte antimikrobielle Substanz, die an dessen freier Oberfläche schneller ausdiffundiert, während die Substanz aus dem größeren Querschnittsbereich mit kleinerer Rate und wegen der längeren Diffusionswege langsamer ausdiffundiert.

Die Borste 1 gemäß Fig.3 weist wiederum einen großen Querschnittsbereich 2 auf, der ihre Gebrauchseigenschaften bestimmt. In diesem Querschnittsbereich 2 findet sich der kleiner Querschnittsbereich 3 als Seele, die gegebenenfalls gemeinsam mit dem größeren Querschnittsbereich 2 durch Koextrudieren hergestellt ist. Sie kann wiederum aus einem anderen Kunststoff bestehen und ist in diesem Fall mit der antimikrobiellen Substanz 4 hoch dotiert. Der größere Querschnittsbereich 2 wirkt in diesem Fall als Diffusionsbremse, bzw. umgekehrt bildet der kleinere Querschnittsbereich 3 eine langsam und stetig fließende Quelle der antimikrobiellen Substanz.

Bei dem Ausführungsbeispiel gemäß Fig.4 sind in dem die Gebrauchseigenschaften der Borste bestimmenden größeren Querschnittsbereich 2 drei kleinere Querschnittsbereiche 3 in Form von Strängen angeordnet, die wiederum mit der antimikrobiellen Substanz hoch dotiert sind. Auch hier wirkt der größere Querschnittsbereich 2 wiederum als Diffusionsbremse.

Bei dem Ausführungsbeispiel gemäß Fig.5 ist in dem größeren Querschnittsbereich 2 der weitere, kleinere Querschnittsbereich 3 in Form eines kreuzförmigen Querschnitts eingelagert. Bei diesem Ausführungsbeispiel sind der kreuzförmige Querschnittsbereich 3 hoch, der größere Querschnittsbereich 2 schwächer mit der antimikrobiellen Substanz dotiert.

Fig.6 zeigt ein Beispiel, bei dem der größere Querschnittsbereich 2 durch den kleineren Querschnittsbereich 3 sternförmig in Sektoren aufgeteilt ist, wobei nur der kleinere Querschnittsbereich 3 mit der antimikrobiellen Substanz hoch dotiert ist.

Fig.7 zeigt eine Borste 6 mit polygonalem, nämlich quadratischem Querschnitt, mit dem eine höhere mechanische Reinigungswirkung als mit einer runden Borste erzielt wird. Die Borste 6 weist wiederum einen größeren Querschnittsbereich 2 aus einem thermoplastischen Kunststoff und einen kleineren Querschnittsbereich 3 in Form eines Segmentes auf, das mit der antimikrobiellen Substanz höher dotiert ist als der große Querschnittsbereich 2. Die Borste 7 gemäß Fig.8 unterscheidet sich von der der Fig.7 lediglich dadurch, daß sie zwei segmentförmige kleinere Querschnittsbereiche 3 an diagonal liegenden Ecken aufweist. In beiden Fällen werden die antimikrobiell wirkenden Kationen vornehmlich an der freien Oberfläche der kleineren Querschnittsbereiche 3 abgegeben. Ein Teil diffundiert aber auch in den größeren Querschnittsbereich 2, der insoweit eine Diffusionsbremse bildet, weil die Kationen erst diesen Querschnittsbereich durchwandern müssen, um an dessen freie Oberfläche zu gelangen.

Bei dem Beispiel gemäß Fig.9 bildet der kleinere Querschnittsbereich 3 eine Schicht auf dem größeren Querschnittsbereich 2, die nur über einen kleinen Teil des Umfangs reicht. Der Querschnittsbereich 3 ist gegenüber der antimikrobiellen Substanz 4 im großen Querschnittsbereich 2 vorzugsweise diffusionsdicht, so daß die an sich zögerliche Diffusion auf der größeren freien Oberfläche des Querschnittsbereichs 2 verstärkt wird. Dies kann gemäß Fig.10 gegebenenfalls in lokal ausgerichteter Form geschehen, indem die die Diffusionsbremse bildende äußere Schicht 3 einen größeren Teil des Umfangs des großen Querschnittsbereichs 2 oder, wie beim Beispiel gemäß Fig. 11, den kompletten Umfang abdeckt. In beiden Beispielen ist die antimikrobielle Substanz ausschließlich im großen Querschnittsbereich 2 untergebracht.

Fig.12 zeigt eine sternförmige Borste 8, deren tragender Querschnittsbereich 2 vierarmig ausgebildet ist, An den Enden jedes Armes sind die kleineren Querschnittsbereiche 3 angeordnet, die mit der antimikrobiellen Substanz 4 hoch dotiert sind, während der Querschnittsbereich 2 weniger hoch dotiert ist.

## Patentansprüche

1. Borste mit einer antimikrobiellen Ausrüstung, die überwiegend aus thermoplastischem Kunststoff besteht und mit einer antimikrobiellen Substanz dotiert ist, die bei Gebrauch an die Oberfläche der Borste diffundiert, wobei die Borste (1) im Mehrkomponenten-Extrusionsverfahren hergestellt ist und wenigstens einen ersten die mechanischen Gebrauchseigenschaften der Borste (1) bestimmenden Querschnittsbereich (2) aus einer Kunststoff-Komponente und wenigstens einen weiteren Querschnittsbereich (3) aus der anderen Kunststoff-Komponente aufweist, wobei der weitere Querschnittsbereich (3) im Inneren des ersten Querschnittsbereichs (2) angeordnet ist, **dadurch gekennzeichnet, daß** der innere weitere Querschnittsbereich (3) mit der antimikrobiellen Substanz dotiert ist und daß der äußere erste Querschnittsbereich (2) eine Diffusionsbremse gegenüber der Substanz in dem dotierten weiteren Querschnittsbereich (3) bildet.

2. Borste nach Anspruch 1, **dadurch gekennzeichnet, daß** die Querschnittsbereiche aus verschiedenen oder verschieden ausgerüsteten Materialien bestehen.

3. Borste nach Anspruch 1 oder 2, **dadurch gekennzeichnet, daß** die Querschnittsbereiche unterschiedliche Querschnittsflächen aufweisen.

4. Borste nach einem der Ansprüche 1 bis 3, **dadurch gekennzeichnet, daß** nur der weitere Querschnittsbereich (3) der Borste (1) mit der Substanz (4) in hoher Konzentration dotiert ist.

5. Borste nach einem der Ansprüche 1 bis 4, **dadurch gekennzeichnet, daß** der erste Querschnittsbereich (2) der Borste (1) mit der Substanz (5) in einer ihre mechanischen Gebrauchseigenschaften nicht beeinträchtigenden Konzentration dotiert ist.

6. Borste nach einem der Ansprüche 1 bis 5, **dadurch gekennzeichnet, daß** der weitere Querschnittsbereich (3) den ersten Querschnittsbereich (2) in Sektoren teilt.

7. Borste nach einem der Ansprüche 1 bis 6, **dadurch gekennzeichnet, daß** wenigstens ein Querschnittsbereich Silber der Oxidationsstufe 0 als antimikrobielle Substanz aufweist.

8. Borste nach einem der Ansprüche 1 bis 7, **dadurch gekennzeichnet, daß** der erste Querschnittsbereich (2) als antimikrobielle Substanz Silber der Oxidationsstufe 0 und der weitere Querschnittsbereich (3) die gleiche Substanz in größerer Konzentration aufweist.

9. Borste nach Anspruch 8, **dadurch gekennzeichnet, daß** der erste Querschnittsbereich (2) Silber der Oxidationsstufe 0 mit einem Gehalt von 500<c<100.000ppm und der weitere Querschnittsbereich (3) einen Gehalt c≤100% aufweist.

10. Borste nach Anspruch 8, **dadurch gekennzeichnet, daß** der weitere Querschnittsbereich (3) Silber der Oxidationsstufe 0 mit einem Gehalt von 500<c<100.000ppm aufweist.

11. Borste nach einem der Ansprüche 1 bis 10, **dadurch gekennzeichnet, daß** wenigstens ein Querschnittsbereich (2, 3) als antimikrobielle Substanz Silber der Oxidationsstufe 1 aufweist.

12. Borste nach Anspruch 11, **dadurch gekennzeichnet, daß** die antimikrobielle Substanz aus der Gruppe der Silberhalogenide, -sulfate, -carbonate und der organischen Silbersalze ausgewählt ist.

13. Borste nach einem der Ansprüche 1 bis 12, **dadurch gekennzeichnet, daß** ein Querschnittsbereich (2, 3) Silber der Oxidationsstufe 0 und wenigstens ein anderer Querschnittsbereich (2, 3) Silber der Oxidationsstufe 1 aufweist.

14. Borste nach einem der Ansprüche 9 bis 13, **dadurch gekennzeichnet, daß** der weitere Querschnittsbereich (3) Silber der Oxidationsstufe 0 in Form wenigstens eines Fadens enthält.

15. Borste nach einem der Ansprüche 7 bis 13, **dadurch gekennzeichnet, daß** das Silber der Oxidationsstufe 0 oder 1 in disperser Form in der Kunststoffmatrix der Borste (1) vorliegt.

16. Borste nach einem der Ansprüche 1 bis 13, **dadurch gekennzeichnet, daß** das Silber der Oxidationsstufe 0 auf wenigstens einen der Querschnittsbereiche (2, 3) als Schicht aufgebracht ist.

17. Borste nach einem der Ansprüche 1 bis 16, **dadurch gekennzeichnet, daß** der weitere Querschnittsbereich (3) aus einem thermoplastischen Elastomer besteht.

18. Borste nach einem der Ansprüche 1 bis 17, **dadurch gekennzeichnet, daß** die Querschnittsbereiche (2, 3) oberflächig oder durchgehend unterschiedlich eingefärbt sind.

19. Borste nach einem der Ansprüche 1 bis 18, **dadurch gekennzeichnet, daß** der thermoplastische Kunststoff eine Wasseraufnahmefähigkeit von wenigstens 0,1 Mass% aufweist.

20. Borste nach Anspruch 19, **dadurch gekennzeichnet, daß** der thermoplastische Kunststoff Polyamid, Polyester oder Polyurethan ist.

21. Borste nach einem der Ansprüche 1 bis 20, **dadurch gekennzeichnet, daß** die Querschnittsbereiche unterschiedliche Wasseraufnahmefähigkeit aufweisen.

22. Borste nach einem der Ansprüche 1 bis 21, **dadurch gekennzeichnet, daß** sie aus zwei oder mehr zusammengeführten Monofilen besteht, die jeweils einen der Querschnittsbereiche bilden.

23. Borstenware mit einem Borstenträger aus Kunststoff und Borsten nach einem der Ansprüche 1 bis 22, **dadurch gekennzeichnet, daß** der Borstenträger zumindest bereichsweise antimikrobiell ausgerüstet ist.

24. Borstenware nach Anspruch 23, **dadurch gekennzeichnet, daß** der Borstenträger aus Kunststoff besteht und partikelförmiges Silber der Oxidationsstufe 0 und/oder 1 enthält.

25. Borstenware nach Anspruch 23 oder 24, **dadurch gekennzeichnet, daß** der Borstenträger aus zwei verschiedenen oder verschiedenartigen Kunststoffen im Mehrkomponentenspritzguß hergestellt und wenigstens eine Komponente mit partikelförmigem Silber der Oxidationsstufe 0 und/oder 1 gefüllt ist.

26. Borstenware nach einem der Ansprüche 23 bis 25, **dadurch gekennzeichnet, daß** der Borstenträger nur oder überwiegend im Bereich des Ansatzes der Borsten mit partikelförmigem Silber der Oxidationsstufe 0 und/oder 1 gefüllt ist.

27. Borstenware nach einem der Ansprüche 23 bis 26, **dadurch gekennzeichnet, daß** die Borsten am oder im Borstenträger einzeln befestigt sind.

28. Borstenware nach einem der Ansprüche 23 bis 27, **dadurch gekennzeichnet, daß** die Borsten durch thermische Verfahren spaltenfrei mit dem Borstenträger verbunden sind.

## Claims

1. Bristle with an antimicrobial finish, which is preponderantly formed from a thermoplastic material and which is doped with an antimicrobial substance which, during use, diffuses to the bristle surface, wherein the bristle (1) is produced in a multicomponent extrusion process and has at least one first cross-sectional region (2) determining the mechanical use characteristics of the bristle (1) and formed from a plastic component and at least one further cross-sectional region (3) from a different plastic component, and that the further cross-sectional region (3) is disposed within the first cross-sectional region (2), **characterized in that** the inner, further cross-sectional region (3) is doped with the antimicrobial substance and the outer, first cross-sectional region (3) forms a diffusion brake with respect to the substance in the doped, further cross-sectional region (3).

2. Bristle according to claim 1, **characterized in that** the cross-sectional regions comprise different or differently finished materials.

3. Bristle according to claim 1 or 2, **characterized in that** the cross-sectional regions have different cross-sectional areas.

4. Bristle according to one of the claims 1 to 3, **characterized in that** only the further cross-sectional region (3) of the bristle (1) is doped with the substance (4) in high concentration.

5. Bristle according to one of the claims 1 to 4, **characterized in that** the first cross-sectional region (2) of the bristle (1) is doped with the substance (5) in a concentration not impairing its mechanical use characteristics.

6. Bristle according to one of the claims 1 to 5, **characterized in that** the further cross-sectional region (3) subdivides the first cross-sectional region (2) into sectors.

7. Bristle according to one of the claims 1 to 6, **characterized in that** at least one cross-sectional region has silver of oxidation level 0 as the antimicrobial substance.

8. Bristle according to one of the claims 1 to 7, **characterized in that** the first cross-sectional region (2) has as the antimicrobial substance silver of oxidation level 0 and the further cross-sectional region (3) has the same substance in a higher concentration.

9. Bristle according to claim 8, **characterized in that** the first cross-sectional region (2) has silver of oxidation level 0 with a content of 500<c< 100,000 ppm and the further cross-sectional region (3) a content of c ≤ 100 %.

10. Bristle according to claim 8, **characterized in that** the further cross-sectional region (3) has silver of oxidation level 0 with a content of 500 < c < 100,000 ppm.

11. Bristle according to one of the claims 1 to 10, **characterized in that** at least one cross-sectional region (2, 4) has silver of oxidation level 1 as the antimicrobial substance.

12. Bristle according to claim 11, **characterized in that** the antimicrobial substance is selected from the group of silver halides, silver sulphates, silver carbonates and organic silver salts.

13. Bristle according to one of the claims 1 to 12, **characterized in that** one cross-sectional region (2, 3) contains silver of oxidation level O and at least one other cross-sectional region (2, 3) silver of oxidation level 1.

14. Bristle according to one of the claims 9 to 13, **characterized in that** the further cross-sectional region (3) contains silver of oxidation level 0 in the form of at least one thread.

15. Bristle according to one of the claims 7 to 13, **characterized in that** the silver of oxidation level 0 or 1 is present in disperse form in the plastic matrix of the bristle (1).

16. Bristle according to one of the claims 1 to 13, **characterized in that** the silver of oxidation level 0 is applied as a layer to at least one of the cross-sectional regions (2, 3).

17. Bristle according to one of the claims 1 to 16, **characterized in that** the further cross-sectional region (3) comprises a thermoplastic elastomer.

18. Bristle according to one of the claims 1 to 17, **characterized in that** the cross-sectional regions (2, 3) are differently surface or through-dyed.

19. Bristle according to one of the claims 1 to 18, **characterized in that** the thermoplastic material has a water absorptivity of at least 0.1 mass%.

20. Bristle according to claim 19, **characterized in that** the thermoplastic material is polyamide, polyester or polyurethane.

21. Bristle according to one of the claims 1 to 20, **characterized in that** the cross-sectional regions have different water absorptivity.

22. Bristle according to one of the claims 1 to 21, **characterized in that** it comprises two or more combined monofilaments, each of which forms one of the cross-sectional regions.

23. Brushware having a plastic bristle carrier and bristles according to one of the claims 1 to 22, **characterized in that** the bristle carrier is at least zonally antimicrobially treated.

24. Brushware according to claim 23, **characterized in that** the bristle carrier is of plastic and contains particulate silver of oxidation level 0 and/or 1.

25. Brushware according to claim 23 or 24, **characterized in that** the bristle carrier is made from two different or different types of plastics in multicomponent injection molding and at least one component is filled with particulate silver of oxidation level 0 and/or 1.

26. Brushware according to one of the claims 23 to 25, **characterized in that** the bristle carrier is filled with particulate silver of oxidation level 0 and/or 1, solely or preponderantly in the region of the attachment of the bristles.

27. Brushware according to one of the claims 23 to 26, **characterized in that** the bristles are individually fastened on or in the bristle carrier.

28. Brushware according to one of the claims 23 to 27, **characterized in that** the bristles are joined in gap-free manner to the bristle carrier by thermal processes.

## Revendications

1. Poil de brosse comportant des moyens antimicrobiens, réalisé essentiellement dans une matière synthétique thermoplastique et pourvu d'une substance antimicrobienne qui diffuse à la surface lors de l'application, le poil (1) étant réalisé par le procédé d'extrusion à composants multiples, et présentant au moins une première zone (2) de section transversale réalisée dans un composant synthétique déterminant les caractéristiques mécaniques d'utilisation du poil (1), et au moins une zone supplémentaire (3) de section transversale réalisée dans l'autre composant synthétique, cette zone supplémentaire (3) de section transversale étant disposée à l'intérieur de la première zone (2) de section transversale, **caractérisé en ce que** la zone supplémentaire (3) de section transversale intérieure est doté de la substance antimicrobienne et **en ce que** la première zone (2) de section transversale extérieure constitue un frein de diffusion pour la substance dont la zone supplémentaire (3) de section transversale est pourvue.

2. Poil selon la revendication 1, **caractérisé en ce que** les zones de section transversale sont réalisées dans des matières différentes ou dans des matières diversement pourvues.

3. Poil selon la revendication 1 ou 2, **caractérisé en ce que** les zones de section transversale présentent des surfaces de section transversale différentes.

4. Poil selon l'une quelconque des revendications 1 à 3, **caractérisé en ce que** seule la zone supplémentaire (3) de section transversale du poil (1) contient la substance (4) en concentration élevée.

5. Poil selon l'une quelconque des revendications 1 à 4, **caractérisé en ce que** la première zone (2) de section transversale du poil (1) contient la substance (5) dans une concentration n'altérant pas ses propriétés mécaniques d'utilisation.

6. Poil selon l'une quelconque des revendications 1 à 5, **caractérisé en ce que** la zone supplémentaire (3) de section transversale divise la première zone (2) de section transversale en secteurs.

7. Poil selon l'une quelconque des revendications 1 à 6, **caractérisé en ce qu'**au moins une zone de section transversale présente comme substance antimicrobienne de l'argent résultant de l'état d'oxydation 0.

8. Poil selon l'une quelconque des revendications 1 à 7, **caractérisé en ce que** la première zone (2) de section transversale présente comme substance antimicrobienne de l'argent résultant de l'état d'oxydation 0 et **en ce que** la zone supplémentaire (3) de section transversale présente la même substance en concentration plus élevée.

9. Poil selon la revendication 8, **caractérisé en ce que** la première zone (2) de section transversale présente de l'argent résultant de l'état d'oxydation 0 à une teneur de 500<c<100.000ppm et la zone supplémentaire (3) de section transversale à une teneur de c≤100%.

10. Poil selon la revendication 8, **caractérisé en ce que** la zone supplémentaire (3) de section transversale présente de l'argent résultant de l'état d'oxydation 0 à une teneur de 500<c<100.000ppm.

11. Poil selon l'une quelconque des revendications 1 à 10, **caractérisé en ce qu'**au moins une zone (2,3) de section transversale présente de l'argent résultant de l'état d'oxydation 0 comme substance antimicrobienne.

12. Poil selon la revendication 11, **caractérisé en ce que** la substance antimicrobienne est choisie dans le groupe des halogénures d'argent, des sulfates d'argent, des carbonates d'argent et des sels d'argent organiques.

13. Poil selon l'une quelconque des revendications 1 à 12, **caractérisé en ce qu'**une zone (2,3) de section transversale présente de l'argent résultant de l'état d'oxydation 0 et au moins une zone supplémentaire (2,3) de section transversale, de l'argent résultant de l'état d'oxydation 1.

14. Poil selon l'une quelconque des revendications 9 à 13, **caractérisé en ce que** la zone supplémentaire (3) de section transversale contient de l'argent résultant de l'état d'oxydation 0 sous la forme d'au moins un fil.

15. Poil selon l'une quelconque des revendications 7 à 13, **caractérisé en ce que** l'argent résultant de l'état d'oxydation 0 ou 1 se trouve sous forme dispersée dans la matrice en matière synthétique du poil (1).

16. Poil selon l'une quelconque des revendications 1 à 13, **caractérisé en ce que** l'argent résultant de l'état d'oxydation 0 est appliqué en couche sur au moins une des zones de section transversale (2,3).

17. Poil selon l'une quelconque des revendications 1 à 16, **caractérisé en ce que** la zone supplémentaire (3) de section transversale est réalisée dans un élastomère thermoplastique.

18. Poil selon l'une quelconque des revendications 1 à 17, **caractérisé en ce que** les zones (2,3) de section transversale sont colorées différemment en surface ou de part en part.

19. Poil selon l'une quelconque des revendications 1 à 18, **caractérisé en ce que** la matière synthétique thermoplastique présente un degré hygroscopique d'au moins 0,1 % en masse.

20. Poil selon la revendication 19, **caractérisé en ce que** la matière synthétique thermoplastique est du polyamide, du polyester ou du polyuréthane.

21. Poil selon l'une quelconque des revendications 1 à 20, **caractérisé en ce que** les zones de section transversale présentent des degrés hygroscopiques différents.

22. Poil selon l'une quelconque des revendications 1 à 21, **caractérisé en ce qu'**il consiste en deux monofils ou plus coextrudés constituant à chaque fois une des zones de section transversale.

23. Article de brosserie comprenant un support de poil en matière synthétique et des poils selon l'une des revendications 1 à 22, **caractérisé en ce que** le support de poil est pourvu au moins par zones de moyens antimicrobiens.

24. Article de brosserie selon la revendication 23, **caractérisé en ce que** le support de poils est en matière synthétique et contient de l'argent résultant de l'état d'oxydation 0 ou 1 sous forme de particules.

25. Article de brosserie selon la revendication 23 ou 24, **caractérisé en ce que** le support de poils est réalisé dans deux matières synthétiques différentes ou hétérogènes par injection à composants multiples, et **en ce qu'**au moins un composant est rempli d'argent sous forme de particules résultant de l'état d'oxydation 0 et/ou 1.

26. Article de brosserie selon l'une quelconque des revendications 23 à 25, **caractérisé en ce que** le support de poils n'est rempli ou n'est essentiellement rempli d'argent sous forme de particules résultant de l'état d'oxydation 0 et/ou 1 que dans la zone de la garniture de poils.

27. Article de brosserie selon l'une quelconque des revendications 23 à 26, **caractérisé en ce que** les poils sont fixés individuellement sur ou dans le support de poils.

28. Article de brosserie selon l'une quelconque des revendications 23 à 27, **caractérisé en ce que** les poils sont reliés au support de brosse sans jeu par des procédés thermiques.
